Europäisches Patentamt

European Patent Office

Office européen des brevets

(11) Veröffentlichungsnummer: **0 144 656**

**A2**

# EUROPÄISCHE PATENTANMELDUNG

(21) Anmeldenummer: **84112599.0**

(22) Anmeldetag: **18.10.84**

(51) Int. Cl.⁴: **G 09 G 1/00**
**B 41 J 3/00**

(30) Priorität: **21.10.83 DE 3338383**

(43) Veröffentlichungstag der Anmeldung:
**19.06.85 Patentblatt 85/25**

(84) Benannte Vertragsstaaten:
**CH DE FR GB IT LI SE**

(71) Anmelder: **Siemens Aktiengesellschaft
Berlin und München Wittelsbacherplatz 2
D-8000 München 2(DE)**

(72) Erfinder: **Günther, Gerd-Joachim, Dipl.-Ing. (FH)
Gailenreuther Strasse 19
D-8000 München 60(DE)**

(72) Erfinder: **Miller, Heide-Marie
Vorhölzerstrasse 1
D-8000 München 71(DE)**

(72) Erfinder: **Rothenaicher, Hermann, Dipl.-Ing.
Laimbichl 79
D-8334 Wurmannsquick(DE)**

(54) **Verfahren und Anordnung zum Darstellen von Schriftzeichen and einer Anzteigeeinheit.**

(57) Bei einer Darstellung von Schriftzeichen (Z1 bis Z3), bei denen die Zeichenform von der jeweiligen Position in einem Wort abhängt, insbesondere bei einer Darstellung von arabischen Schriftzeichen wird bei der Eingabe des ersten Schriftzeichens (Z1) dieses in einer Grundform, beispielsweise in der isolierten Form dargestellt. Falls ein zweites Zeichen (Z2) eingegeben wird, wird dieses in der Endungsform dargestellt, während das erste Zeichen (Z1) von der isolierten Form in die Anfangsform verändert wird. Bei der Eingabe von weiteren Zeichen (Z3) werden diese jeweils in der Endungsform dargestellt und das jeweils voragehende Zeichen (Z2) wird in eine Mittenform abgeändert.

FIG 1

EP 0 144 656 A2

0144656

Siemens Aktiengesellschaft          Unser Zeichen
Berlin und München                  VPA  83 P 1 8 5 6 E
                        _1_

Verfahren und Anordnung zum Darstellen von Schriftzeichen
an einer Anzeigeeinheit

Die Erfindung bezieht sich auf ein Verfahren zum Darstellen von Schriftzeichen an einer Anzeigeeinheit entsprechend dem Oberbegriff des Patentanspruchs 1. Weiterhin bezieht sich die Erfindung auf eine Anordnung zur Durchführung des Verfahrens.

Es ist allgemein bekannt, daß bei manchen Schriftarten die Zeichenformen der Schriftzeichen davon abhängen, ob das Schriftzeichen einzelstehend, am Anfang, in der Mitte oder am Schluß eines Worts angeordnet ist. Ein Beispiel für eine derartige Schriftart ist die arabische Schrift. Die arabische Schrift wird, mit Ausnahme der Ziffern von rechts nach links geschrieben und die meisten Schriftzeichen werden in einer unterschiedlichen Zeichenform dargestellt, je nach dem, ob sie in der isolierten Form, der Anfangsform, der Mittenform oder der Endungsform dargestellt werden.

Aus einer Veröffentlichung "Electronic Subtitling in Arabic", International Broadcast Engineer, 1982, Seiten 76 bis 79 ist es bekannt, an dem Bildschirm eines Fernsehgeräts auf einer Videokassette gespeicherte Schriftzeichen in der jeweils richtigen Form in Abhängigkeit von der Position im Wort darzustellen. Eine Eingabe der Zeichen durch den Benutzer selbst ist dabei nicht vorgesehen.

Bei Fernschreibmaschinen ist es bekannt, bei der Eingabe der Schriftzeichen diese jeweils zwischenzuspeichern und

Ret 1 Fra / 21.10.1983

zu prüfen, ob weitere Schriftzeichen vorangehen und/oder nachfolgen, um die jeweils richtige Form auszuwählen. Eine derartige Art der Eingabe hat für den Benutzer jedoch den Nachteil, daß kein unmittelbarer Zusammenhang zwischen der Eingabe und der Ausgabe des Zeichens am Druckwerk der Fernschreibmaschine besteht, da mit dem Ausdrucken des Zeichens jeweils solange gewartet wird, bis das nächstfolgende Zeichen eingegeben wurde.

Der Erfindung liegt die Aufgabe zugrunde, ein Verfahren und eine Anordnung anzugeben, bei deren Verwendung die Eingabe der Schriftzeichen insbesondere dadurch wesentlich erleichtert wird, daß nach jeder Eingabe eines Zeichens ein entsprechendes Zeichen an einer Anzeigeeinheit dargestellt wird.

Erfindungsgemäß wird die Aufgabe bei dem Verfahren der eingangs genannten Art durch die im kennzeichnenden Teil des Patentanspruchs 1 angegebenen Merkmale gelöst.

Das Verfahren gemäß der Erfindung hat den Vorteil, daß nach jeder Eingabe eines Schriftzeichens ein entsprechendes Schriftzeichen unmittelbar dargestellt wird, wobei die Darstellung des Schriftzeichens nicht endgültig ist und sich im Laufe der Eingabe weiterer Zeichen so verändert, daß nach der vollständigen Eingabe eines Textes alle Schriftzeichen in der richtigen Form dargestellt sind.

Als erste Grundform, in der ein erstes Zeichen zunächst eingegeben wird, kann die Anfangsform verwendet werden. Es erweist sich jedoch als zweckmäßig, jeweils die isolierte Form zunächst darzustellen. Als zweite Grundform kann die Mittenform oder vorzugsweise die Endungsform eingegeben werden. Es ist auch denkbar, von jedem Schriftzeichen zunächst die wahrscheinlichste Form als Grundform darzustellen. In diesem Fall sind wenige Änderungen der Zeichenformen erforderlich.

Bei manchen Schriftarten verschmelzen zwei nacheinander eingegebene Zeichen zu einem einzigen Zeichen. Auch in diesem Fall ist es zweckmäßig, zunächst das erste Zeichen in seiner Grundform und nach der Eingabe des zweiten Zeichens das erste Zeichen entsprechend abzuändern und gegebenenfalls das zweite Zeichen durch ein Zeichen "Zwischenraum" zu ersetzen.

Bei manchen Schriftarten treten auch Schriftzeichen auf, die die Form des vorangehenden Zeichens nicht verändern. Gegebenenfalls tritt eine Veränderung des zuvor eingegebenen Zeichens erst dann auf, wenn auf die formneutralen Schriftzeichen ein formveränderndes Schriftzeichen folgt. In diesem Fall wird zumindest ein Teil der vorangehenden Zeichen verändert.

Eine vorteilhafte Anordnung zur Durchführung des Verfahrens enthält einen Speicher, in dem die Schriftzeichen durch Codewörter codiert gespeichert sind, eine Schaltstufe, die in Abhängigkeit von den jeweils vorangehenden und nachfolgenden Zeichen Datenwörter erzeugt, die der jeweiligen Zeichenform des darzustellenden Schriftzeichens zugeordnet sind und einen Anzeigespeicher, in dem die Datenwörter zwischengespeichert werden und einem Zeichengenerator in der Anzeigeeinheit zugeführt werden. Der Speicher, die Schaltstufe und der Anzeigespeicher sind zweckmäßigerweise Bestandteile einer Steuereinheit, die aus mindestens einem Mikrorechner gebildet wird.

Das Verfahren und die Anordnung gemäß der Erfindung werden im folgenden anhand von Zeichnungen näher erläutert. Es zeigen

0144656

Fig. 1 Ausschnitte einer an einer Anzeigeeinheit dargestellten Zeile,

Fig. 2 ein Blockschaltbild eines Ausführungsbeispiels
einer Anordnung zur Durchführung des Verfahrens.

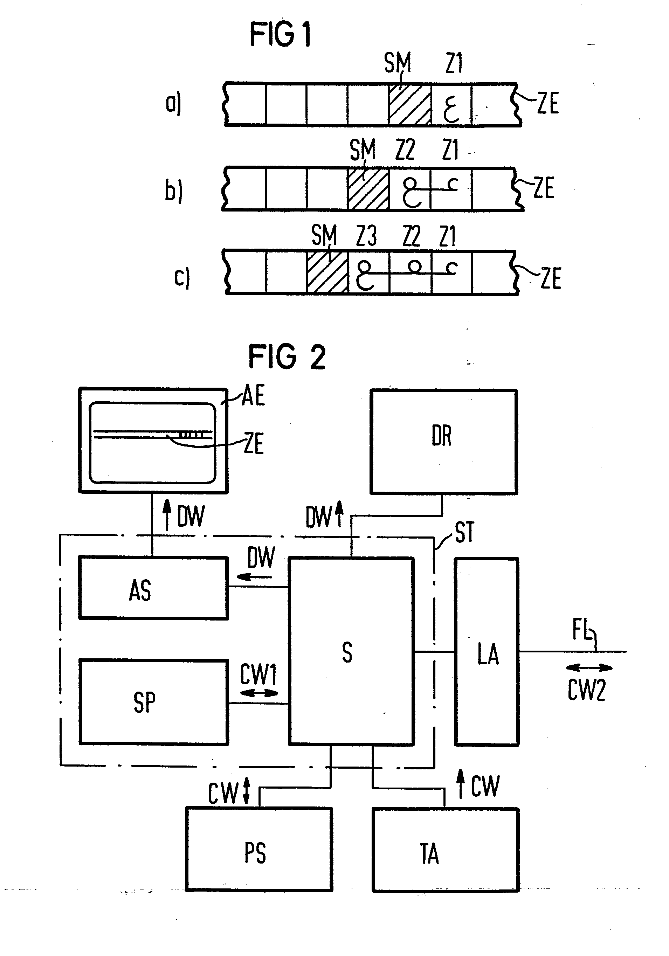

Bei der Darstellung in Fig. 1 wird angenommen, daß in
einer Zeile ZE an einer Anzeigeeinheit, beispielsweise
einer einzeiligen Anzeigeeinheit oder einer für eine
mehrzeilige Darstellung vorgesehenen Kathodenstrahlröhre
Schriftzeichen dargestellt werden, deren Form von der Position in einem Wort abhängt. Ein Beispiel für eine derartige Schriftart ist die arabische Schrift, bei der ein
Großteil der Schriftzeichen in Abhängigkeit von der Position in einem Wort eine andere Zeichenform aufweist. Diese Schriftzeichen können in einer isolierten Form dargestellt werden, wenn das Zeichen als Einzelzeichen dargestellt wird, als Anfangszeichen dargestellt werden, wenn
das Zeichen den Anfang eines Worts bildet, als Mittenzeichen dargestellt werden, wenn das Zeichen innerhalb eines
Worts auftritt oder als Endungszeichen dargestellt werden, wenn das Zeichen als letztes Zeichen eines Worts angeordnet ist. In Fig. 1 sind beispielsweise die vier verschiedenen Zeichenformen des Zeichens "GAIN" der arabischen Schrift dargestellt.

Weitere Einzelheiten werden im folgenden zusammen mit dem
in Fig. 2 dargestellten Blockschaltbild beschrieben.

Das in Fig. 2 dargestellte Blockschaltbild stellt das
Blockschaltbild eines Textkommunikationsgeräts, beispielsweise einer Fernschreibmaschine dar, die eine Tastatur TA, einen peripheren Speicher PS, eine Anzeigeeinheit AE, ein Druckwerk DR und eine mit einer Fernleitung
FL verbundene Leitungsanpassung LA aufweist. Weiterhin
ist eine Steuereinheit ST vorgesehen, die eine Schaltstufe S zum Steuern der Ein/Ausgabe- und Übertragungsvorgänge dient. Die Steuereinheit ST enthält weiterhin einen
Speicher SP und einen der Anzeigeeinheit AE zugeordneten
Anzeigespeicher AS. Die Schaltstufe S, der Speicher SP
und der Anzeigespeicher AS sind vorzugsweise Bestandteile
mindestens eines Mikrorechnersystems.

Wenn mittels der Tastatur TA als erstes Zeichen oder als
erstes Zeichen nach einem Zwischenraum das Zeichen "GAIN"
eingegeben wird, gelangt dieses Zeichen in Form eines Codeworts CW über die Schaltstufe S als Codewort CW1 in den
Speicher SP. Die Schaltstufe S prüft, ob unmittelbar vor
dem Zeichen ein abdruckbares Zeichen durch ein entsprechendes Codewort CW1 bereits gespeichert ist. Falls dies
nicht der Fall ist, wird in den Anzeigespeicher AS ein
Datenwort DW eingespeichert, das einer ersten Grundform
des Zeichens, beispielsweise der isolierten Form zugeordnet ist. Vom Anzeigespeicher AS gelangt dieses Datenwort
DW zu einem Zeichengenerator in der Anzeigeeinheit AE und
am Bildschirm der Anzeigeeinheit AE wird, wie es in Fig.
1 in Zeile a dargestellt ist, als Zeichen Z1 die isolierte Form des Zeichens "GAIN" dargestellt. Eine Schreibmarke SM rückt auf den nächsten Zeichenplatz, um die Position innerhalb der Zeile ZE anzuzeigen, an der das nächste Zeichen dargestellt wird.

Falls als nächstes Zeichen ein Zeichen "Zwischenraum" eingegeben wird, bleibt die Zeichenform des Zeichens Z1 unverändert. Falls jedoch, wie in Zeile b dargestellt ist,
ein weiteres Zeichen "GAIN" oder ein anderes Schriftzeichen eingegeben wird, verändert das Zeichen Z1 seine Zeichenform von der isolierten Form in seine Anfangsform.
Das eingegebene Zeichen Z2 wird dabei in einer zweiten
Grundform, beispielsweise in seiner Endungsform dargestellt.

0144656

Falls als nächstes Zeichen ein Zeichen "Zwischenraum" eingegeben wird, verbleibt das Zeichen Z2 in seiner Endungsform und das Zeichen Z1 in seiner Anfangsform. Falls jedoch ein weiteres Zeichen, beispielsweise nochmals das
Zeichen "GAIN" eingegeben wird, wie es in Zeile c in Fig.
1 dargestellt ist, wird die Zeichenform des Zeichens Z2
von seiner Endungsform in seine Mittenform geändert, während das Zeichen Z3 in seiner Endungsform dargestellt
wird. Entsprechendes gilt für weitere eingegebene Schriftzeichen, wobei jeweils das vorangehende Zeichen von seiner Endungsform in seine Mittenform abgeändert wird.

Als erste Grundform, in der, wie beschrieben, jeweils die
isolierte Form dargestellt ist, kann auch jeweils die Anfangsform dargestellt werden. Es ist auch möglich, als
zweite Grundform für das zweite Zeichen jeweils die Mittenform anstelle der Endungsform darzustellen. Es ist
weiterhin möglich, aufgrund von Wahrscheinlichkeitsermittlungen jeweils die wahrscheinlichste Zeichenform darzustellen.

In manchen Schriftarten, beispielsweise ebenfalls in der
arabischen Schrift sind Zeichen vorhanden, die nach der
Eingabe von zwei Zeichen an einem Zeichenplatz dargestellt werden. Wenn das zweite Zeichen der Zeichenfolge
eingegeben ist, wird das erste Zeichen an der Anzeigeeinheit AE entsprechend verändert und an der Stelle des
zweiten Zeichens wird beispielsweise ein Zeichen "Zwischenraum" dargestellt.

In der arabischen Schrift sind weiterhin formenneutrale
Zeichen vorgesehen, die die Form der vorangehenden Zeichen nicht verändern. Beim Auftreten dieser Zeichen
bleibt die Form des an der Anzeigeeinheit AE dargestellten Zeichens unverändert. Es besteht auch die Möglichkeit, falls anschließend ein formveränderndes Zeichen eingegeben wird, ein oder mehrere vorangehende Zeichen entsprechend zu verändern.

Die Codewörter CW können auch von dem peripheren Speicher PS eingegeben werden oder in Form von Fernschreibzeichen CW2 über die Fernleitung FL und die Leitungsanpassung LA empfangen werden. In jedem Fall werden die Zeichen in der in Fig. 1 gezeigten Weise dargestellt, wobei selbstverständlich bei einer hohen Übertragungsrate die Veränderung der einzelnen Zeichen am Bildschirm der Anzeigeeinheit AE nicht erkennbar ist. Beim Ausdrucken der Nachrichten werden die Datenwörter DW dem Druckwerk DR zugeführt, das dann die entsprechenden Zeichen in ihrer endgültigen Form darstellt. Falls die im Speicher SP gespeicherten Nachrichten über die Fernleitung FL zu einem fernen Teilnehmer übertragen werden, erfolgt dies durch Codewörter CW2, beispielsweise in Form von Fernschreibzeichen, die der Bedeutung der Zeichen und nicht der Form der Zeichen zugeordnet sind.

10 Patentansprüche
 2 Figuren

Patentansprüche

1. Verfahren zum Darstellen von Schriftzeichen an einer Anzeigeeinheit, bei dem die Zeichenformen der Schriftzeichen in Abhängigkeit von der Position in einem Wort in einer isolierten Form, einer Anfangsform, einer Mittenform oder einer Endform dargestellt werden, d a d u r c h g e k e n n z e i c h n e t , daß bei der Eingabe eines Schriftzeichens (Z1) dieses zunächst in einer ersten Grundform an der Anzeigeeinheit (AE) dargestellt wird, daß, falls anschließend ein zweites Schriftzeichen (Z2) eingegeben wird, dieses in einer zweiten Grundform dargestellt wird und das erste Schriftzeichen (Z1) in seiner Anfangsform dargestellt wird, daß, falls kein weiteres Schriftzeichen eingegeben wird, das erste Schriftzeichen (Z1) in seiner isolierten Form dargestellt wird, daß, falls weitere Schriftzeichen (Z3) des Worts eingegeben werden, diese jeweils in der zweiten Grundform dargestellt werden und die vorangehenden Schriftzeichen (Z2) jeweils in der Mittenform dargestellt werden und daß, falls kein weiteres Schriftzeichen eingegeben wird, das letzte Schriftzeichen (Z3) in seiner Endungsform dargestellt wird.

2. Verfahren nach Anspruch 1, d a d u r c h g e - k e n n z e i c h n e t , daß als erste Grundform jeweils die isolierte Form des Schriftzeichens (Z1) vorgesehen ist.

3. Verfahren nach Anspruch 1, d a d u r c h g e - k e n n z e i c h n e t , daß als erste Grundform jeweils die Anfangsform des Schriftzeichens (Z1) vorgesehen ist.

4. Verfahren nach einem der Ansprüche 1 bis 3, d a - d u r c h g e k e n n z e i c h n e t , daß als zwei-

0144656

93 P 1856

te Grundform die Endungsform des Schriftzeichens (Z2)
vorgesehen ist.

5. Verfahren nach einem der Ansprüche 1 bis 3, d a -
d u r c h   g e k e n n z e i c h n e t , daß als zweite Grundform jeweils die Endungsform des Schriftzeichens
(Z2, Z3) vorgesehen ist.

6. Verfahren nach Anspruch 1, d a d u r c h   g e -
k e n n z e i c h n e t ,   daß als erste und zweite
Grundform jeweils die wahrscheinlichste Zeichenform der
Schriftzeichen (Z1 bis Z3) vorgesehen ist.

7. Verfahren nach einem der Ansprüche 1 bis 6, d a -
d u r c h   g e k e n n z e i c h n e t , daß zwei aufeinanderfolgende Schriftzeichen, die als einziges Schriftzeichen darstellbar sind, durch Veränderung des ersten
der beiden Schriftzeichen dargestellt werden.

8. Verfahren nach einem der Ansprüche 1 bis 7, d a -
d u r c h   g e k e n n z e i c h n e t , daß bei der
Eingabe von formenneutralen Schriftzeichen das vorangehende Schriftzeichen in seiner Zeichenform unverändert
bleibt.

9. Anordnung zur Durchführung des Verfahrens nach Anspruch 1, g e k e n n z e i c h n e t   d u r c h
einen Speicher (SP), in dem die Zeichen (Z1 bis Z3) durch
Codewörter (CW1) codiert gespeichert sind, durch eine
Schaltstufe (S) die in Abhängigkeit von den vorangehenden und nachfolgenden Schriftzeichen (Z1 bis Z3) Datenwörter (DW) erzeugt, die der jeweiligen Schriftform des
Schriftzeichens (Z1 bis Z3) zugeordnet sind und durch
einen Anzeigespeicher (AS), in dem die Datenwörter (DW)
zwischengespeichert werden und einem Zeichengenerator in
der Anzeigeeinheit (AE) zugeführt werden.

0144656

83 P 1856 E

10. Anordnung nach Anspruch 9, d a d u r c h   g e -
k e n n z e i c h n e t ,   daß der Speicher (SP), die
Schaltstufe (S) und der Anzeigespeicher (AS) Bestandteile
einer Steuereinheit (ST) sind, die aus mindestens einem
Mikrorechner gebildet wird.

0144656

## FIG 1

a)    SM    Z1    ZE

b)    SM    Z2    Z1    ZE

c)    SM    Z3    Z2    Z1    ZE

## FIG 2

AE

ZE

DR

DW

DW

ST

AS

DW

S

LA

FL

SP

CW1

CW2

CW

CW

PS

TA